# EUROPEAN PATENT SPECIFICATION

(11) **EP 4 478 136 B1**
(45) Date of publication and mention of the grant of the patent: **24.09.2025**
(21) Application number: 22925874.4
(22) Date of filing: 10.02.2022
(51) Int. Cl.: G05B 9/02, G21D 3/06

(54) **SAFETY PROTECTION SYSTEM BACKUP DEVICE**
SICHERHEITSSCHUTZSYSTEMSICHERUNGSVORRICHTUNG
DISPOSITIF DE SECOURS DE SYSTÈME DE PROTECTION DE SÉCURITÉ

(43) Date of publication of application: 18.12.2024
(73) Proprietor: MITSUBISHI ELECTRIC CORPORATION, Chiyoda-ku Tokyo 100-8310 (JP)
(72) Inventor: OKUDA, Susumu, Tokyo 100-8310 (JP)
(74) Representative: Mewburn Ellis LLP
(86) International application number: PCT/JP2022/005280
(87) International publication number: WO 2023/152853

(56) References cited:
- WO-A1-2020/090034
- CN-A- 103 400 623
- JP-A- 2005 249 609
- JP-A- 2011 191 855
- JP-A- 2018 101 241
- US-B2- 10 929 273
- US-B2- 9 368 240

## Description

### TECHNICAL FIELD

The present disclosure relates to a safety protection system backup device.

### BACKGROUND ART

In a nuclear power plant, a reactor trip breaker is used as one device in a protection-system facility for shutting down a nuclear reactor in a case where abnormality has occurred. A control rod drive device is supplied with power from a power bus via a power converter and the reactor trip breaker, and when the reactor trip breaker is released, the control rod drive device is no longer supplied with power and a control rod is inserted in a nuclear reactor, to shut down the nuclear reactor. In addition, the protection-system facility includes safety system equipment such as pumps and valves for injecting cooling water into the nuclear reactor and urgently cooling the nuclear reactor in the case of abnormality, other than the reactor trip breaker.

The protection-system facility receives signals from various detection sensors, and, if a protection logic has determined that the nuclear reactor needs to be shut down or urgently cooled, a nuclear reactor shutdown signal is generated and an operation (release) request signal is transmitted to the reactor trip breaker or the safety system equipment.

The protection-system facility is configured so as to be multiplexed in order to achieve high reliability, but, when a common cause failure (CCF) occurs between multiplexed devices, there is a possibility that the operation (release) request signal cannot be transmitted to the reactor trip breaker and the like even in a case where abnormality has occurred in a plant.

To correctly shut down a nuclear reactor in a case where a CCF has occurred in a protection-system facility, a method of installing a CCF countermeasure facility for backing up the protection-system facility is disclosed (e.g., see Patent Document 1). The main cause of a CCF that occurs in the multiplexed protection-system facility is a software error. Therefore, the CCF countermeasure facility is an analog facility composed of electric circuit parts such as switches and relays, and, in response to a signal from a detection sensor, the CCF countermeasure facility determines whether the nuclear reactor needs to be shut down. Upon receiving a nuclear reactor shutdown signal from the CCF countermeasure facility, a power conversion device interrupts power supply to a reactor trip breaker. Thus, a control rod drive device comes to a power loss state, and a control rod is inserted into the nuclear reactor, so that the nuclear reactor is shut down. Patent Document 2 discloses a safety protection system facility outputting a normal actuating signal in a case where the safety protection system facility controls actuation of a unit provided in a nuclear facility to a safe side based on an abnormality detecting signal output at the time of occurrence of an abnormality in the nuclear facility, and where this causes the unit to be actuated normally, and a CCF countermeasure facility outputting a CCF-case actuating signal actuating the unit to a safe side in a case where the CCF countermeasure facility determines from output results of the abnormality detecting signal and the normal actuating signal that the unit is not actuated normally at the time of occurrence of the abnormality in the nuclear facility. Patent Document 3 discloses a verification method for an application logic provided with one or more macro logics configured to perform a predetermined operation, a macro operation control unit configured to instruct the one or more macro logics to start the operation to cause the one or more macro logics to perform the operation.

### CITATION LIST

### PATENT DOCUMENT

Patent Document 1: Japanese Laid-Open Patent Publication No. 2012-122907
Patent Document 2: US 9 368 240 B2
Patent Document 3: US 10 929 273 B2

### SUMMARY OF THE INVENTION

### PROBLEM TO BE SOLVED BY THE INVENTION

However, when the CCF countermeasure facility is composed of an analog facility including switches, relays, and the like as in Patent Document 1, signal input devices corresponding to the number of detectors are required. Further, signal output devices corresponding to the number of site devices in the protection-system facility are required.

In addition, a CCF device is allowed to be designed and produced such that a design grade thereof is relaxed as compared to that of the protection-system facility as a regular system facility, but, in order to prevent an electric fault in the CCF device from influencing the protection-system facility, a separation device such as a relay or a fuse for interrupting the influence of the electric fault is required to be provided between the CCF device and the protection-system facility. Therefore, the number of functions implemented in the CCF device is increased, thereby increasing the scale of the CCF device according to the number of inputs and outputs.

The present disclosure has been made to solve the above problem and an object of the present disclosure is to provide a safety protection system backup device in which the scale of a CCF device is not increased even if the number of detectors and safety-system local components is increased.

### MEANS TO SOLVE THE PROBLEM

A safety protection system backup device according to claim 1 is provided.

### EFFECT OF THE INVENTION

In the safety protection system backup device according to the present disclosure, the first safety protection logic in the safety protection device and the second safety protection logic in the CCF device are configured to respectively execute different application software, whereby the input device and the output device can be shared by the safety protection device and the CCF device, an input device and an output device exclusive to the CCF device need not be provided, and increase in the number of the detectors and the safety-system local components can also be dealt with without increasing the scale of the CCF device.

### BRIEF DESCRIPTION OF THE DRAWINGS

[FIG. 1] FIG. 1 is a schematic structure view of a safety protection system backup device according to embodiment 1.

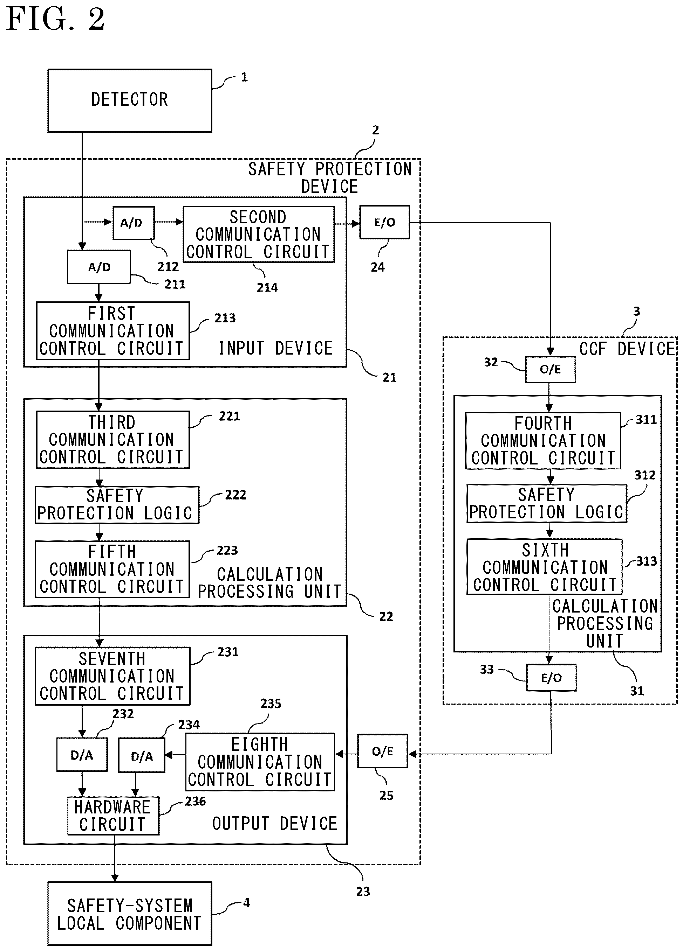

[FIG. 2] FIG. 2 is a schematic structure view of a safety protection system backup device according to embodiment 2.
[FIG. 3] FIG. 3 is a schematic structure view of a safety protection system backup device according to embodiment 3.
[FIG. 4] FIG. 4 is a schematic structure view of a safety protection system backup device according to embodiment 4.
[FIG. 5] FIG. 5 is a hardware configuration diagram of a safety protection logic according to embodiments 1 to 4.

### DESCRIPTION OF EMBODIMENTS

Hereinafter, preferred embodiments of a safety protection system backup device according to the present disclosure will be described with reference to the drawings. The same or corresponding things and parts are denoted by the same reference characters, and the detailed description thereof is omitted. Also, in the following embodiments, components denoted by the same reference characters will not be described repeatedly.

### Embodiment 1

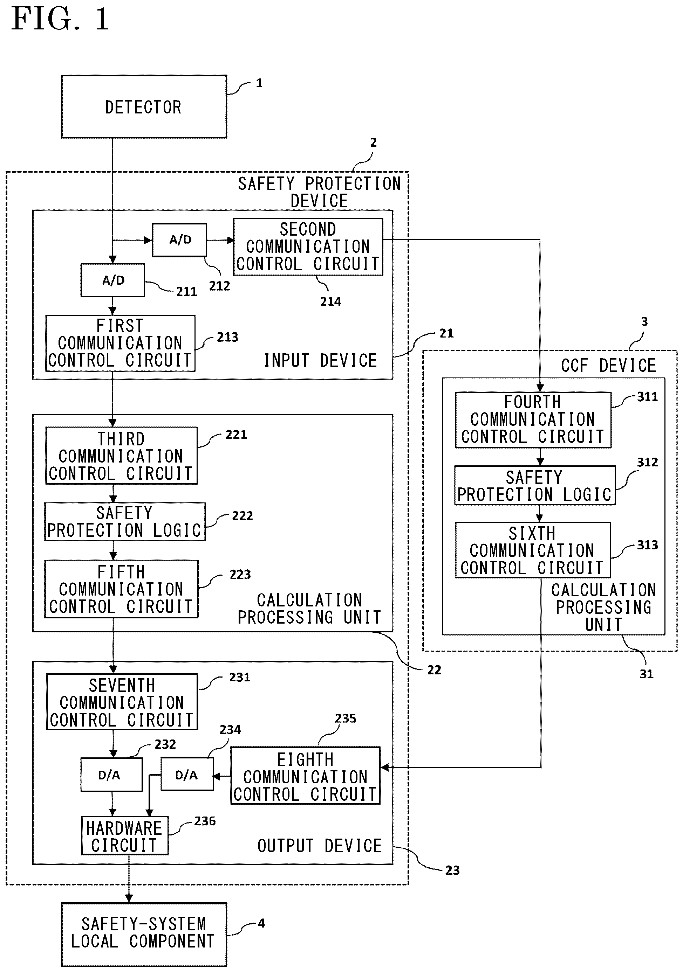

FIG. 1 is a schematic structure view of the safety protection system backup device of the present embodiment. A case where the present embodiment is applied to a nuclear power plant will be described, but the present embodiment is not limited thereto. A detector 1 monitors the state of a nuclear power plant, and transmits a detection signal to a safety protection device 2 which is a protection-system facility. The transmitted detection signal is inputted to an input device 21 of the safety protection device 2, and is electrically distributed in the input device 21. One of the distributed signals is inputted to an analog/digital (A/D) conversion circuit 211 of the safety protection device 2 and another thereof is inputted to an A/D conversion circuit 212 for a CCF device 3.

The detection signal is converted to a digital signal by the A/D conversion circuit 211, and the digital signal is transmitted to a calculation processing unit 22 via a first communication control circuit 213 of the safety protection device 2. The transmitted digital signal is received by a third communication control circuit 221 which is an input at the calculation processing unit 22, and is used, by a safety protection logic 222 implemented as execution of a previously designed protection logic (hereinafter, referred to as application software) by a microprocessor or a FPGA, to generate an operation command signal of the protection-system facility to a safety-system local component 4. The operation command signal, generated by the safety protection logic 222, to the safety-system local component 4 is transmitted to an output device 23 via a fifth communication control circuit 223 which is an output at the calculation processing unit 22. Here, the function of application software includes four analog arithmetic operations, in addition to a logical operation.

In the output device 23, the operation command signal transmitted from the fifth communication control circuit 223 is received by a seventh communication control circuit 231 and then is converted to an analog signal by a digital/analog (D/A) conversion circuit 232, and the analog signal is transmitted to a hardware (H/W) circuit 236 which is a final output end. The H/W circuit executes priority processing on the inputted signal. Examples of the H/W circuit include an OR circuit, an AND circuit, an ON priority circuit, and an OFF priority circuit. However, the H/W circuit is not limited thereto.

On the other hand, the digital signal inputted to the A/D conversion circuit 212 is transmitted to a second communication control circuit 214 for the CCF device 3.

The A/D conversion circuit 211 and the A/D conversion circuit 212 are respectively composed of and implemented with circuits or devices (parts) different from each other. Similarly, the first communication control circuit 213 and the second communication control circuit 214 are also respectively composed of and implemented with circuits or parts different from each other.

The second communication control circuit 214 transmits the inputted digital signal to a fourth communication control circuit 311 connected to a calculation processing unit 31 of the CCF device 3 in the same manner as for the calculation processing unit 22. The transmitted digital signal is received by the fourth communication control circuit 311, and then is used, by the safety protection logic 312 configured by a microprocessor or a field-programmable gate array (FPGA) in which application software is implemented, to generate an operation request signal to the safety-system local component 4.

Here, in order to ensure diversity, the following is applied to each component:
(1) As a communication protocol between the second communication control circuit 214 and the fourth communication control circuit 311, a communication protocol different from a communication protocol to be applied between the first communication control circuit 213 and the third communication control circuit 221 is applied.
(2) The calculation processing unit 31 and the calculation processing unit 22 respectively execute similar digital signal processings by different circuits. For example, as a microprocessor of the calculation processing unit 31, a device different from a microprocessor of the calculation processing unit 22 is applied, or a FPGA is used in the calculation processing unit 31.
(3) The safety protection logic 312 and the safety protection logic 222 are respectively designed on the basis of different ideas for similar digital signal processings. For example, in a case where microprocessors are used in the calculation processing unit 31 and the calculation processing unit 22, design concepts of application software to be implemented are made different, and the microprocessors are designed by different designers so as not to make determination on the basis of the same logical configuration. In a case where a FPGA is used in the calculation processing unit 31, the FPGA is programmed by a different designer so that processing similar to the digital signal processing by the microprocessor in the calculation processing unit 22 has a logical configuration based on a different design concept.
(4) The CCF device 3 and the safety protection device 2 are designed by different designers in different departments so as to have different design concepts and provide protection on the basis of different logical configurations, respectively.

The operation request signal, generated by the safety protection logic 312, to the safety-system local component 4 is transmitted to the output device 23 of the safety protection device 2 from a sixth communication control circuit 313 which is an output at the calculation processing unit 31. The transmitted operation request signal is received by an eighth communication control circuit 235 for the CCF device 3 and then is converted to an analog signal by a D/A conversion circuit 234 for the CCF device 3, and then the analog signal is outputted to the H/W circuit 236.

The D/A conversion circuit 232 and the D/A conversion circuit 234 are respectively composed of and implemented with circuits or devices (parts) different from each other. Similarly, the seventh communication control circuit 231 and the eighth communication control circuit 235 are respectively composed of circuits or parts different from each other. Further, as a communication protocol between the sixth communication control circuit 313 and the eighth communication control circuit 235, a communication protocol different from a communication protocol between the fifth communication control circuit 223 and the seventh communication control circuit 231 is applied.

The safety protection system backup device is configured as described above, whereby the input device and the output device can be shared by the safety protection equipment and the CCF device. Thus, an input device and an output device exclusive to the CCF device need not be provided, and increase in the number of the detectors and the safety-system local components can also be dealt with without increasing the scale of the CCF device.

### Embodiment 2

In the configuration of embodiment 1, a photoelectric (E/O) conversion circuit 24 which converts to an optical signal an electric signal transmitted from the second communication control circuit 214 of the safety protection device 2, and an O/E conversion circuit 32 which converts to an electric signal the optical signal received by the CCF device, are applied.

Similarly, an E/O conversion circuit 33 which converts to an optical signal an output signal of the sixth communication control circuit 313 of the CCF device 3, and an O/E conversion circuit 25 which converts to an electric signal the signal received by the safety protection device 2, are applied.

Thus, optical signals are transmitted and received between the safety protection device 2 and the CCF device 3, whereby, in a case where an electric fault or the like has occurred in the CCF device 3, the influence of the failure is prevented from spreading to the safety protection device 2. Further, since signals are transmitted through optical cables, a transmission distance can be extended as compared to a case where electric signals are used, and a constraint condition for an installation place of the CCF device 3 can be relaxed.

As described above, in the configuration of embodiment 2, the CCF device is connected to the input device and the output device through the optical cables, whereby an electric fault in the CCF device can be prevented from influencing the safety protection system backup device, and a separation device need not be provided.

### Embodiment 3

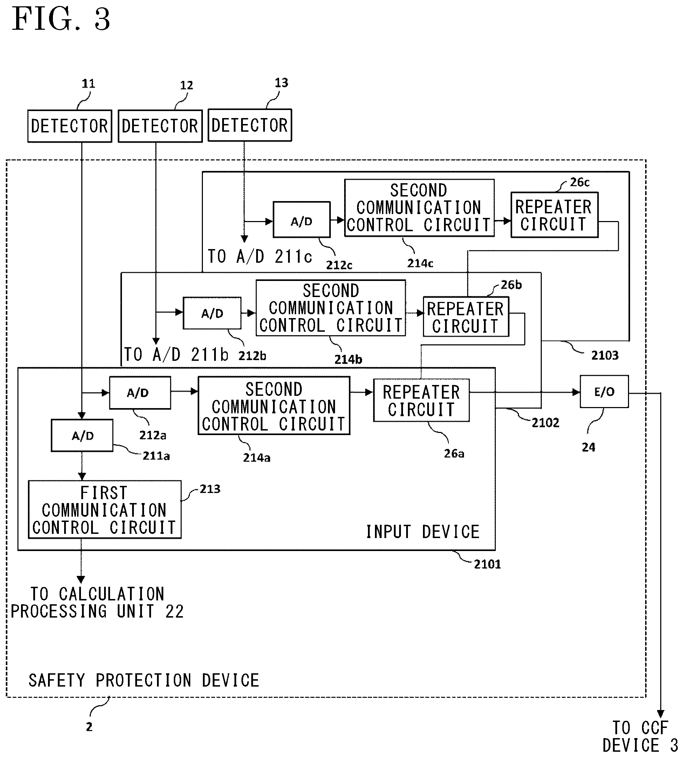

As shown in FIG. 3, in the configuration of embodiment 1 or embodiment 2, detection signals from a plurality of detectors 11, 12, 13 are transmitted to the safety protection device 2 which is a protection-system facility. The transmitted detection signals are inputted to input devices 2101, 2102, 2103 of the safety protection device 2, and are electrically distributed in the input devices 2101, 2102, 2103. The signals distributed to one side are inputted to A/D conversion circuits 211a, 211b, 211c of the safety protection device 2 and the signals distributed to another side are inputted to A/D conversion circuits 212a, 212b, 212c for the CCF device 3. Outputs from the A/D conversion circuits 212a, 212b, 212c are inputted to repeater circuits 26a, 26b, 26c each having a signal aggregation function via a plurality of second communication control circuits 214a, 214b, 214c, respectively. The repeater circuits 26a, 26b, 26c are each an electrical amplification circuit including a multiplexer, a two-port memory, and the like. The amplified signals are transmitted to the CCF device 3 via an E/O conversion circuit 24. With such a configuration, the detection signals from the plurality of detectors 11, 12, 13 can be transmitted to the CCF device 3 without increasing the number of transmission lines. In the present embodiment, an example in which signals from the three detectors are inputted to the three input devices is shown, but the number of the detectors and the number of the input devices are not limited thereto.

### Embodiment 4

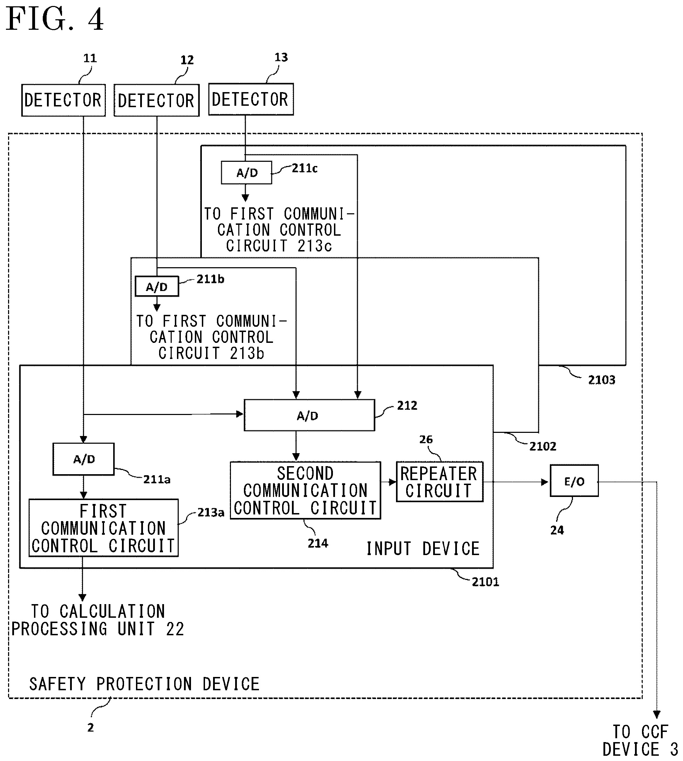

As shown in FIG. 4, the detection signals transmitted from the detectors 11, 12, 13 are respectively inputted to the plurality of input devices 2101, 2102, 2103, and are electrically distributed in the input devices 2101, 2102, 2103. The signals distributed to one side are inputted to the A/D conversion circuits 211a, 211b, 211c of the safety protection device 2 and the signals distributed to another side are inputted to the A/D conversion circuit 212 for the CCF device 3 in one input device (e.g., input device 2101). An output from the A/D conversion circuit 212 is inputted to a repeater circuit 26 via the second communication control circuit 214. The signal amplified by the repeater circuit 26 is transmitted to the CCF device 3 via the E/O conversion circuit 24. Thus, the A/D conversion circuits for the CCF device 3 in the two input devices 2102, 2103, the second communication control circuits, and the repeater circuits are unnecessary, and the input device can be reduced in size. In the present embodiment, an example in which signals from the three detectors are inputted to the three input devices is shown, but the number of the detectors and the number of the input devices are not limited thereto. Further, in the present embodiment, an example in which the A/D conversion circuit, the second communication control circuit, and the repeater circuit disposed in one input device are shared with other input devices is shown, but only the A/D conversion circuit or the A/D conversion circuit and the second communication control circuit may be shared.

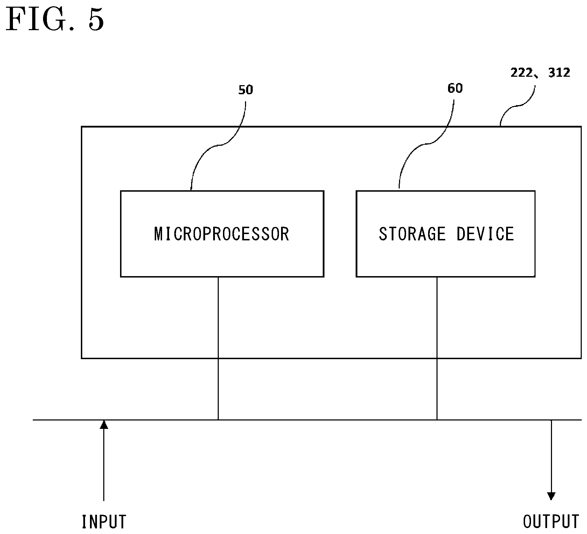

One example of hardware of the safety protection logics 222, 312 is shown in FIG. 5. As described above, the safety protection logics 222, 312 are each composed of a microprocessor 50 and a storage device 60. Although not shown, a storage device 60 includes a volatile storage device such as a random access memory, and a nonvolatile auxiliary storage device such as a flash memory. The storage device 60 may include an auxiliary storage device such as a hard disk, instead of a flash memory. The microprocessor 50 executes application software inputted from the storage device 60. In this case, the program is inputted to the microprocessor 50 via the volatile storage device from the auxiliary storage device. The microprocessor 50 may output data such as a calculation result to the volatile storage device of the storage device 60, or store such data into the auxiliary storage device via the volatile storage device. As hardware of the safety protection logic 312, a FPGA may be used instead of the microprocessor, as described above.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure.

It is therefore understood that numerous modifications which have not been exemplified can be devised without departing from the scope of the present disclosure. For example, at least one of the constituent components may be modified, added, or eliminated. At least one of the constituent components mentioned in at least one of the preferred embodiments may be selected and combined with the constituent components mentioned in another preferred embodiment.

### DESCRIPTION OF THE REFERENCE CHARACTERS

1, 11, 12, 13 detector
2 safety protection device
3 CCF device
4 safety-system local component
21, 2101, 2102, 2103 input device
22 calculation processing unit
23 output device
24 E/O conversion circuit
25 O/E conversion circuit
26, 26a, 26b, 26c repeater circuit
31 calculation processing unit
32 O/E conversion circuit
33 E/O conversion circuit
50 microprocessor
60 storage device
211, 211a, 211b, 211c, 212, 212a, 212b, 212c A/D conversion circuit
213 first communication control circuit
214, 214a, 214b, 214c second communication control circuit
221 third communication control circuit
222 safety protection logic
223 fifth communication control circuit
231 seventh communication control circuit
232, 234 D/A conversion circuit
235 eighth communication control circuit
236 H/W circuit
311 fourth communication control circuit
312 safety protection logic
313 sixth communication control circuit

## Claims

1. A safety protection system backup device configured to detect a state of a plant, and which, if an abnormality is found, is configured to issue an instruction to a safety-system local component (4) according to an output of a first safety protection logic (222) in a safety protection device (2) and, if a common cause failure is found in the safety protection device (2), is configured to issue an instruction to the safety-system local component (4) according to an output of a second safety protection logic (312) in a CCF device (3),
the safety protection system back up device comprising:
a detector (1) configured to detect a state of the plant;
first and second analog/digital conversion circuits (211,212) which are disposed in an input device (21) of the safety protection device (2) and are configured to perform digital conversion on an output of the detector (1);
a first communication control circuit (213) which is disposed in the input device (21) and is configured to transmit to a calculation processing unit (22) a signal outputted from the first analog/digital conversion circuit (211);
a second communication control circuit (214) which is disposed in the input device (21) and is configured to transmit to the CCF device (3) a signal outputted from the second analog/digital conversion circuit (212);
a third communication control circuit (221) which is disposed in a first calculation processing unit (22) of the safety protection device (2), configured to receive an output of the first communication control circuit (213), and to transmit the output to the first safety protection logic (222) of the calculation processing unit (22);
a fourth communication control circuit (311) configured to receive an output of the second communication control circuit (214) and to transmit the output to the second safety protection logic (312) disposed in a second calculation processing unit (31) of the CCF device (3);
a fifth communication control circuit (223) which is disposed in the first calculation processing unit (22) and is configured to transmit an output of the first safety protection logic (222);
a sixth communication control circuit (313) which is disposed in the second calculation processing unit (31) and is configured to transmit an output of the second safety protection logic (312);
a seventh communication control circuit (231) configured to receive a signal transmitted from the fifth communication control circuit (223) and is disposed in an output device region (23) of the safety protection device (2);
an eighth communication control circuit (235) configured to receive a signal transmitted from the sixth communication control circuit (313) and is disposed in the output device region (23);
a first digital/analog conversion circuit (232) which is disposed in the output device region (23) and is configured to perform analog conversion on a signal of the seventh communication control circuit (231);
a second digital/analog conversion circuit (234) which is disposed in the output device region (23) and is configured to perform analog conversion on a signal of the eighth communication control circuit (235); and
a hardware circuit (236) to which a signal of the first or second digital/analog conversion circuit (232,234) is inputted and which is configured to perform output to the safety-system local component (4),
**characterised in that**
the first safety protection logic (222) and the second safety protection logic (312) is configured to execute digital signal processings based on logical configurations different from each other,
the first analog/digital conversion circuit (211) and the second analog/digital conversion circuit (212) are composed of circuits or parts different from each other,
the first digital/analog conversion circuit (232) and the second digital/analog conversion circuit (234) are composed of circuits or parts different from each other,
a communication protocol between the first communication control circuit (213) and the third communication control circuit (221) is different from a communication protocol between the second communication control circuit (214) and the fourth communication control circuit (311), and
a communication protocol between the fifth communication control circuit (223) and the seventh communication control circuit (231) is different from a communication protocol between the sixth communication control circuit (313) and the eighth communication control circuit (235).

2. The safety protection system backup device according to claim 1, wherein
a first photoelectric conversion circuit (24) is connected to a stage subsequent to the second communication control circuit (214),
a second photoelectric conversion circuit (32) is connected to a stage preceding the fourth communication control circuit (311),
the first photoelectric conversion circuit (24) and the second photoelectric conversion circuit (32) are connected by an optical fiber cable,
a third photoelectric conversion circuit (33) is connected to a stage subsequent to the sixth communication control circuit (313),
a fourth photoelectric conversion circuit (25) is connected to a stage preceding the eighth communication control circuit (235), and
the third photoelectric conversion circuit (33) and the fourth photoelectric conversion circuit (25) are connected by an optical fiber cable.

3. The safety protection system backup device according to claim 1 or 2, configured such that
in a case where outputs of a plurality of the detectors (11,12,13) are subjected to digital conversion by a plurality of the second analog/digital conversion circuits (212a,212b,212c) disposed in a plurality of the input devices (2101,2102,2103) and then are transmitted to the CCF device (3) via a plurality of the second communication control circuits (214a,214b,214c), outputs from the plurality of second communication control circuits (214a,214b,214c) are transmitted via repeater circuits (26a,26b,26c).

4. The safety protection system backup device according to claim 1 or 2, configured such that
in a case where outputs of a plurality of the detectors (11,12,13) are inputted to a plurality of the input devices (2101,2102,2103) and then are transmitted to the CCF device (3), the outputs of the plurality of detectors (11,12,13) are converted by the second analog/digital conversion circuit (212) disposed in one of the input devices (2101).

## Patentansprüche

1. Sicherheitsschutzsystem-Datensicherungsvorrichtung, die ausgelegt ist, um einen Zustand einer Anlage zu detektieren, und die, falls eine Anomalie gefunden wird, ausgelegt ist, um einen Befehl an eine lokale Sicherheitssystemkomponente (4) gemäß einer Ausgabe einer ersten Sicherheitsschutzlogik (222) in einer Sicherheitsschutzvorrichtung (2) zu erteilen, und, falls ein gemeinsam verursachter Ausfall in der Sicherheitsschutzvorrichtung (2) gefunden wird, ausgelegt ist, um einen Befehl an die lokale Sicherheitssystemkomponente (4) gemäß einer Ausgabe einer zweiten Sicherheitsschutzlogik (312) in einer CCF-Vorrichtung (3) zu erteilen,
wobei die Sicherheitsschutzsystem-Datensicherungsvorrichtung Folgendes umfasst:
einen Detektor (1), der ausgelegt ist, um einen Zustand der Anlage zu detektieren;
eine erste und zweite Analog/Digital-Wandlerschaltung (211, 212), die in einer Eingabevorrichtung (21) der Sicherheitsschutzvorrichtung (2) angeordnet sind und ausgelegt sind, um eine digitale Umwandlung einer Ausgabe des Detektors (1) durchzuführen;
eine erste Kommunikationssteuerschaltung (213), die in der Eingabevorrichtung (21) angeordnet ist und ausgelegt ist, um ein Signal, das von der ersten Analog/Digital-Wandlerschaltung (211) ausgegeben wurde, an eine Berechnungsverarbeitungseinheit (22) zu übertragen;
eine zweite Kommunikationssteuerschaltung (214), die in der Eingabevorrichtung (21) angeordnet ist und ausgelegt ist, um ein Signal, das von der zweiten Analog/Digital-Wandlerschaltung (212) ausgegeben wurde, an die CCF-Vorrichtung (3) zu übertragen;
eine dritte Kommunikationssteuerschaltung (221), die in einer ersten Berechnungsverarbeitungseinheit (22) der Sicherheitsschutzvorrichtung (2) angeordnet ist, die ausgelegt ist, um eine Ausgabe der ersten Kommunikationssteuerschaltung (213) zu empfangen und um die Ausgabe an die erste Sicherheitsschutzlogik (222) der Berechnungsverarbeitungseinheit (22) zu übertragen;
eine vierte Kommunikationssteuerschaltung (311), die ausgelegt ist, um eine Ausgabe der zweiten Kommunikationssteuerschaltung (214) zu empfangen und um die Ausgabe an die zweite Sicherheitsschutzlogik (312) zu übertragen, die in einer zweiten Berechnungsverarbeitungseinheit (31) der CCF-Vorrichtung (3) angeordnet ist;
eine fünfte Kommunikationssteuerschaltung (223), die in der ersten Berechnungsverarbeitungseinheit (22) angeordnet ist und ausgelegt ist, um eine Ausgabe der ersten Sicherheitsschutzlogik (222) zu übertragen;
eine sechste Kommunikationssteuerschaltung (313), die in der zweiten Berechnungsverarbeitungseinheit (31) angeordnet ist und ausgelegt ist, um eine Ausgabe der zweiten Sicherheitsschutzlogik (312) zu übertragen;
eine siebte Kommunikationssteuerschaltung (231), die ausgelegt ist, um ein Signal zu empfangen, das von der fünften Kommunikationssteuerschaltung (223) übertragen wurde, und in einem Ausgabevorrichtungsbereich (23) der Sicherheitsschutzvorrichtung (2) angeordnet ist;
eine achte Kommunikationssteuerschaltung (235), die ausgelegt ist, um ein Signal zu empfangen, das von der sechsten Kommunikationssteuerschaltung (313) übertragen wurde, und die in dem Ausgabevorrichtungsbereich (23) angeordnet ist;
eine erste Digital/Analog-Wandlerschaltung (232), die in dem Ausgabevorrichtungsbereich (23) angeordnet ist und ausgelegt ist, um eine analoge Umwandlung eines Signals der siebten Kommunikationssteuerschaltung (231) durchzuführen;
eine zweite Digital/Analog-Wandlerschaltung (234), die in dem Ausgabevorrichtungsbereich (23) angeordnet ist und ausgelegt ist, um eine analoge Umwandlung eines Signals der achten Kommunikationssteuerschaltung (235) durchzuführen; und
eine Hardwareschaltung (236), an die ein Signal der ersten oder zweiten Digital/Analog-Wandlerschaltung (232, 234) eingegeben wird, und die ausgelegt ist, um eine Ausgabe an die lokale Sicherheitssystemkomponente (4) durchzugeben,
**dadurch gekennzeichnet, dass**:
die erste Sicherheitsschutzlogik (222) und die zweite Sicherheitsschutzlogik (312) ausgelegt sind, um Digitalsignalverarbeitungen basierend auf logischen Konfigurationen durchzuführen, die sich voneinander unterscheiden,
die erste Analog/Digital-Wandlerschaltung (211) und die zweite Analog/Digital-Wandlerschaltung (212) aus Schaltungen oder Teilen bestehen, die sich voneinander unterscheiden,
die erste Digital/Analog-Wandlerschaltung (232) und die zweite Analog/Digital-Wandlerschaltung (234) aus Schaltungen oder Teilen bestehen, die sich voneinander unterscheiden,
sich ein Kommunikationsprotokoll zwischen der ersten Kommunikationssteuerschaltung (213) und der dritten Kommunikationssteuerschaltung (221) von einem Kommunikationsprotokoll zwischen der zweiten Kommunikationssteuerschaltung (214) und der vierten Kommunikationssteuerschaltung (311) unterscheidet, und
sich ein Kommunikationsprotokoll zwischen der fünften Kommunikationssteuerschaltung (223) und der siebten Kommunikationssteuerschaltung (231) von einem Kommunikationsprotokoll zwischen der sechsten Kommunikationssteuerschaltung (313) und der achten Kommunikationssteuerschaltung (235) unterscheidet.

2. Sicherheitsschutzsystem-Datensicherungsvorrichtung nach Anspruch 1, wobei:
eine erste photoelektrische Wandlerschaltung (24) mit einer Stufe verbunden ist, die der zweiten Kommunikationssteuerschaltung (214) nachgeschaltet ist,
eine zweite photoelektrische Wandlerschaltung (32) mit einer Stufe verbunden ist, die der vierten Kommunikationssteuerschaltung (311) vorgeschaltet ist,
die erste photoelektrische Wandlerschaltung (24) und die zweite photoelektrische Wandlerschaltung (32) durch ein optisches Faserkabel verbunden sind,
eine dritte photoelektrische Wandlerschaltung (33) mit einer Stufe verbunden ist, die der sechsten Kommunikationssteuerschaltung (313) nachgeschaltet ist,
eine vierte photoelektrische Wandlerschaltung (25) mit einer Stufe verbunden ist, die der achten Kommunikationssteuerschaltung (235) vorgeschaltet ist, und
die dritte photoelektrische Wandlerschaltung (33) und die vierte photoelektrische Wandlerschaltung (25) durch ein optisches Faserkabel verbunden sind.

3. Sicherheitsschutzsystem-Datensicherungsvorrichtung nach Anspruch 1 oder 2, die so ausgelegt ist, dass:
in einem Fall, in dem Ausgaben einer Vielzahl der Detektoren (11, 12, 13) einer digitalen Umwandlung durch eine Vielzahl der zweiten Analog/Digital-Wandlerschaltungen (212a, 212b, 212c), die in einer Vielzahl der Eingabevorrichtungen (2101, 2102, 2103) angeordnet sind, unterzogen werden und dann über eine Vielzahl der zweiten Kommunikationsprotokollschaltungen (214a, 214b, 214c) an die CCF-Vorrichtung (3) übertragen werden, Ausgaben aus der Vielzahl von zweiten Kommunikationssteuerschaltungen (214a, 214b, 214c) über Wiederholungsschaltungen (26a, 26b, 26c) übertragen werden.

4. Sicherheitsschutzsystem-Datensicherungsvorrichtung nach Anspruch 1 oder 2, die so ausgelegt ist, dass:
in einem Fall, in dem Ausgaben einer Vielzahl der Detektoren (11, 12, 13) in eine Vielzahl der Eingabevorrichtungen (2101, 2102, 2103) eingegeben werden und dann an die CCF-Vorrichtung (3) übertragen werden, die Ausgaben der Vielzahl von Detektoren (11, 12, 13) durch die zweite Analog/Digital-Wandlerschaltung (212), die in einer der Eingabevorrichtungen (2101) angeordnet ist, umgewandelt werden.

## Revendications

1. Dispositif de secours de système de protection de sécurité configuré pour détecter un état d'une installation, et qui, si une anomalie est détectée, est configuré pour émettre une instruction à un composant local de système de sécurité (4) en fonction d'une sortie d'une première logique de protection de sécurité (222) dans un dispositif de protection de sécurité (2) et qui, si une défaillance de cause commune, CCF, est constatée dans le dispositif de protection de sécurité (2), est configuré pour émettre une instruction au composant local de système de sécurité (4) en fonction d'une sortie d'une deuxième logique de protection de sécurité (312) dans un dispositif CCF (3),
le dispositif de secours de système de protection de sécurité comprenant :
un détecteur (1) configuré pour détecter un état de l'installation;
un premier et un deuxième circuits de conversion analogique/numérique (211, 212) qui sont disposés dans un dispositif d'entrée (21) du dispositif de protection de sécurité (2) et sont configurés pour effectuer une conversion numérique sur une sortie du détecteur (1);
un premier circuit de commande de communication (213) qui est disposé dans le dispositif d'entrée (21) et est configuré pour transmettre, à une unité de traitement de calcul (22), un signal fourni en sortie par le premier circuit de conversion analogique/numérique (211) ;
un deuxième circuit de commande de communication (214) qui est disposé dans le dispositif d'entrée (21) et est configuré pour transmettre, au dispositif CCF (3), un signal fourni en sortie par le deuxième circuit de conversion analogique/numérique (212) ;
un troisième circuit de commande de communication (221) qui est disposé dans une première unité de traitement de calcul (22) du dispositif de protection de sécurité (2), configuré pour recevoir une sortie du premier circuit de commande de communication (213), et pour transmettre la sortie à la première logique de protection de sécurité (222) de l'unité de traitement de calcul (22) ;
un quatrième circuit de commande de communication (311) configuré pour recevoir une sortie du deuxième circuit de commande de communication (214) et pour transmettre la sortie à la deuxième logique de protection de sécurité (312) disposée dans une deuxième unité de traitement de calcul (31) du dispositif CCF (3) ;
un cinquième circuit de commande de communication (223) qui est disposé dans la première unité de traitement de calcul (22) et qui est configuré pour transmettre une sortie de la première logique de protection de sécurité (222) ;
un sixième circuit de commande de communication (313) qui est disposé dans la deuxième unité de traitement de calcul (31) et qui est configuré pour transmettre une sortie de la deuxième logique de protection de sécurité (312) ;
un septième circuit de commande de communication (231) configuré pour recevoir un signal transmis par le cinquième circuit de commande de communication (223) et disposé dans une région de dispositif de sortie (23) du dispositif de protection de sécurité (2) ;
un huitième circuit de commande de communication (235) configuré pour recevoir un signal transmis par le sixième circuit de commande de communication (313) et disposé dans la région de dispositif de sortie (23) ;
un premier circuit de conversion numérique/analogique (232) qui est disposé dans la région de dispositif de sortie (23) et est configuré pour effectuer une conversion analogique sur un signal du septième circuit de commande de communication (231) ;
un deuxième circuit de conversion numérique/analogique (234) qui est disposé dans la région de dispositif de sortie (23) et est configuré pour effectuer une conversion analogique sur un signal du huitième circuit de commande de communication (235) ; et
un circuit matériel (236) auquel est appliqué en entrée un signal du premier ou du deuxième circuit de conversion numérique/analogique (232, 234) et qui est configuré pour effectuer une fourniture en sortie vers le composant local de système de sécurité (4),
**caractérisé en ce que**
la première logique de protection de sécurité (222) et la deuxième logique de protection de sécurité (312) sont configurées pour exécuter des traitements de signal numérique sur la base de configurations logiques différentes les unes des autres,
le premier circuit de conversion analogique/numérique (211) et le deuxième circuit de conversion analogique/numérique (212) sont composés de circuits ou de parties différent(e)s les un(e)s des autres,
le premier circuit de conversion numérique/analogique (232) et le deuxième circuit de conversion numérique/analogique (234) sont composés de circuits ou de parties différent(e)s les un(e)s des autres,
un protocole de communication entre le premier circuit de commande de communication (213) et le troisième circuit de commande de communication (221) est différent d'un protocole de communication entre le deuxième circuit de commande de communication (214) et le quatrième circuit de commande de communication (311), et
un protocole de communication entre le cinquième circuit de commande de communication (223) et le septième circuit de commande de communication (231) est différent d'un protocole de communication entre le sixième circuit de commande de communication (313) et le huitième circuit de commande de communication (235).

2. Dispositif de secours de système de protection de sécurité selon la revendication 1, dans lequel
un premier circuit de conversion photoélectrique (24) est connecté à un étage subséquent au deuxième circuit de commande de communication (214),
un deuxième circuit de conversion photoélectrique (32) est connecté à un étage précédant le quatrième circuit de commande de communication (311),
le premier circuit de conversion photoélectrique (24) et le deuxième circuit de conversion photoélectrique (32) sont connectés par un câble à fibre optique,
un troisième circuit de conversion photoélectrique (33) est connecté à un étage subséquent au sixième circuit de commande de communication (313),
un quatrième circuit de conversion photoélectrique (25) est connecté à un étage précédant le huitième circuit de commande de communication (235), et
le troisième circuit de conversion photoélectrique (33) et le quatrième circuit de conversion photoélectrique (25) sont connectés par un câble à fibre optique.

3. Dispositif de secours de système de protection de sécurité selon la revendication 1 ou 2, configuré de sorte que,
dans le cas où les sorties d'une pluralité des détecteurs (11, 12, 13) sont soumises à une conversion numérique par une pluralité des deuxièmes circuits de conversion analogique/numérique (212a, 212b, 212c) disposés dans une pluralité des dispositifs d'entrée (2101, 2102, 2103), et sont ensuite transmises au dispositif CCF (3) par l'intermédiaire d'une pluralité des deuxièmes circuits de commande de communication (214a, 214b, 214c), les sorties provenant de la pluralité de deuxièmes circuits de commande de communication (214a, 214b, 214c) sont transmises par l'intermédiaire de circuits répéteurs (26a, 26b, 26c).

4. Dispositif de secours de système de protection de sécurité selon la revendication 1 ou 2, configuré de sorte que,
dans le cas où les sorties d'une pluralité des détecteurs (11, 12, 13) sont appliquées en entrée à une pluralité des dispositifs d'entrée (2101, 2102, 2103) et sont ensuite transmises au dispositif CCF (3), les sorties de la pluralité de détecteurs (11, 12, 13) sont converties par le deuxième circuit de conversion analogique/numérique (212) disposé dans un des dispositifs d'entrée (2101).
